# EUROPEAN PATENT APPLICATION

(11) **EP 1 630 896 A1**
(43) Date of publication of application: **01.03.2006**
(21) Application number: 04724138.5
(22) Date of filing: 29.03.2004
(51) Int. Cl.: H01M 10/50, H01M 2/10

(54) **RADIATING MEMBER FOR LAMINATED BATTERY AND METHOD OF MANUFACTURING THE SAME**

(30) Priority: 31.03.2003 JP 2003094266
(71) Applicant: NEC Lamilion Energy, Ltd., Tsukaba-shi, Ibaraki 305-8501 (JP)
(72) Inventor: KANAI, Takeshi, NEC Lamilion Energy, Ltd., Ibaraki 305-8501 (JP)
(74) Representative: Wenzel & Kalkoff
(86) International application number: PCT/JP2004/004411
(87) International publication number: WO 2004/088784

(57) **Abstract**

A radiating member (2) of the present invention comprises a plurality of first walls (2a), and second walls (2b) connected to first walls (2a) and formed substantially at right angles to the first walls (2a), which are alternately and continuously formed. The first walls (2a) are arranged substantially perpendicular to the surface (1d) of a laminated cell (1) such that they do not collapse by loads applied from the top and bottom surfaces of the laminated cells (1). The second walls (2b) make up a flat plane substantially parallel with the surfaced (1d) in order to gain a heat transfer area and uniformly apply the loads to the laminated cell (1). To ensure a largest possible area for the second walls (2b), R-sections (2c), which connect the second walls (2b) with the first walls (2a), are formed to have a smallest possible radius.

## Description

### TECHNICAL FIELD

The present invention relates to a radiating member for a laminated cell covered with a laminate material, a battery pack system, and a method of manufacturing the radiating member.

### BACKGROUND ART

At present, batteries used in compact electronic devices such as portable information communications devices such as portable telephones and notebook-type personal computers, video cameras, and card-shaped electronic calculators, which attach importance to the portability, are required to be light and thin. Also, as requests are increased for a reduction in resources and energy for purposes of international protection for the earth environment, the development is rapidly under progress for electric cars and hybrid electric cars (hereinafter simply called the "electric cars") which are mounted with batteries for driving motors. The batteries mounted in the electric cars are also required to be light and thin, as a matter of course, in order to improve the driving characteristics and running distance per recharge.

In response to such requests, cells using laminate materials for their sheaths have been developed in order to reduce the cells in weight and thickness, where the laminate material is a thin sheet made by stacking a metal layer such as aluminum and a thermally sealable resin layer through an adhesive layer. Generally, the laminate material is made up of a thin metal layer such as aluminum and a thin resin layer which covers both surfaces of the metal layer, and has properties of being resistant to acid and alkali as well as being light and flexible.

On the other hand, when cells are used for a power source, battery packs, which have a plurality of unit cells connected in series, have been commercially available in order to produce a required voltage from a rated voltage of the unit cell. Also, in order to provide a required current capacity, battery packs, which have a plurality of unit cells connected in parallel, have also been commercially available. When a cell is recharged or discharged, active materials on the positive pole and negative pole expand and contract. Thus, the cell is contained in a metal-made housing to suppress deformations because the properties of the cell are affected by the expansion and contraction. Further, when cells are packed into a battery pack, the cells are applied with a load to suppress swelling. Also, the battery pack is required to reduce as much as possible variations of cooling in the respective cells.

Thus, in order to suppress the swelling of respective cells in a battery pack and reduce variations of cooling among the respective cells as much as possible, there have been disclosed a battery pack (for example, JP-A-7-122252) which uses a radiating member sandwiched between cells, and has metal plates in honeycomb shape (hollow hexagonal column) between the respective cells together with the radiating members, and a battery pack system (for example, JP-A-10-112301) which has a corrugated, rectangular or triangular cooling spacer which is in close contact with a side surface of a secondary cell.

However, the corrugated or triangular spacer collapses if a strong contact pressure is applied to the cell, possibly experiencing difficulties in providing a desired wall contact pressure and cooling properties.

Also, the invention disclosed in JP-A-7-122252 is preferable in that a high contact pressure is uniformly applied to the cells when the battery pack has the honeycomb metal plate disposed between the respective cells together with the radiating member, but experiences difficulties in directly sending cooling air to the surfaces of the cells. Further, this invention cannot rectify the cooling air flowing through the honeycomb metal plates, because they are opposite to each other, so that the air stagnates in a central portion of the battery pack, seemingly resulting in a possible difference in the amount of radiated heat between the central zone and outer peripheral zone of the battery pack.

On the other hand, the invention of JP-A-10-112301 describes that a rectangular air-cooling spacer excels in uniformly applying a stronger contact pressure to a cell, however, the air-cooling spacer of this invention is intended for a battery can which has a relatively rigid sheath, so that it is hard to say that this invention is applicable to a laminated cell that has a flexible film-like sheath intended by the present inventors.

Specifically, since a battery can suppress the swelling of cells during recharge and discharge to some degree by the battery can, a smaller load is only required for suppressing the swelling of the cells. However, in a laminated cell, the swelling of cells can hardly be suppressed by the laminate film which serves as a sheath. For this reason, in comparison with the resistance to load of an air-cooling spacer sandwiched between cells in a battery pack using a battery can, a radiating member sandwiched between laminated cells is required to have a higher resistance to load.

Also, since the laminated cell is configured to hermetically seal laminated electrodes by adhering laminate materials around the periphery, a joint results from the adhesion of the laminate materials to each other around the periphery. The joint is an indispensable element for a laminated cell in order to ensure the sealability. However, when a large number of cells are contained in a housing as a battery pack, the joints will have volumes occupied thereby too large to be negligible, thus resulting in an increase in the size of the housing. Thus, the laminated cell has a peculiar problem in the packing into a battery pack. Also, the joints can prevent cooling air from flowing to cells or radiating members and the like.

### DISCLOSURE OF THE INVENTION

The present invention has been made in view of the problems as mentioned above, and it is an object of the invention to provide a radiating member for a laminated cell which is capable of more effectively applying a strong contact pressure to cells, and has improved cooling properties, a battery pack system, and a method of manufacturing the radiating member.

The radiating member for a laminated cell of the present invention is a radiating member for a laminated cell, covered with a laminate material, which is in contact with a surface of the laminated cell to radiate heat produced by the laminated cell, characterized in that the radiating member has a plurality of first walls, and a plurality of second flat walls connected to the first walls and arranged substantially at right angles to the first walls, wherein at least one of the second walls is arranged for close contact with a sheathed surface of the laminated cell.

In the radiating member of the present invention as described above, the second walls are arranged flatly for close contact with the sheathed surface of the laminated cell, and the first walls connected to the second walls are arranged substantially at right angles to the second walls, i.e., substantially at right angles to the sheathed surface of the laminated cell as well. In this way, when a contact pressure is applied to the laminated cell, the first walls, which are substantially at right angles to the sheathed surface of the laminated cell, receive the load, so that high load resistance properties can be provided. Also, since the plurality of second walls are flatly in close contact with the sheathed surface of the laminated cell, the load can be uniformly applied. Further, with the second walls flatly in close contact with the sheathed surface of the laminated cell, heat produced in the laminated cell can be effectively transferred to the radiating member, and effectively radiated from the second walls and further from the first walls connected to the second walls.

Also, in the radiating member of the present invention, the first walls and the second walls may be alternately and continuously formed. In this case, the radiating member can more uniformly apply a contact pressure to the laminated cell, and can more uniformly remove heat produced in the laminated cell.

Also, the radiating member of the present invention may be formed with a lattice-shaped ventilation frame. In other words, the radiating member of the present invention comprises a shape which readily passes cooling air therethrough in addition to good load resistance properties and heat transfer properties.

Also, the radiating member of the present invention may be made of at least one material selected from a group comprising aluminum, aluminum alloy, copper, silver paste, and stainless steel, in particular, or may be made of a plate material having a thickness of 0.1 mm or less, or may further be made of a single plate material.

A battery pack system of the present invention is a battery pack system which comprises a battery pack having a plurality of electrically coupled laminated cells each covered with a laminate material, characterized by having the radiating member for the laminated cell of the present invention.

Also, the battery pack system of the present invention may be formed with a lattice-shaped ventilation frame by having the radiating member for a laminated cell of the present invention.

Also, in the battery pack system of the present invention, a joint, which is a peripheral portion of the laminate material, may be bent, and part of the joint may be in contact with the metal-made housing or the radiating member. The battery pack system of the present invention in such a configuration can not only reduce a packing volume for laminated batteries, but also transfer heat of the laminated cells to a metal-made housing through the joint or to the radiating member for radiation. Further, the joint may be bent to have a bending height which does not exceed the thickness of the laminated cell, and placed in the housing, in which case cooling air flowing into the radiating member is less prone to adverse effects.

A method of manufacturing a radiating member for a laminated cell of the present invention is a method of manufacturing a radiating member, which is in contact with a surface of the laminated cell covered with a laminate material for radiating heat generated by the laminated cell, characterized by having a step of providing a metal-made plate member having a rectangular-wave shape in cross-section, and having first walls, second flat walls connected to one end side of the first walls and arranged substantially at right angles to the first walls, and third walls connected to the other end side of the first walls and arranged substantially at right angles to the first walls, a cutting step of cutting the first walls and the second walls, without cutting the third walls, at a predetermined cutting position in a longitudinal direction of the first walls, the second walls, and the third walls, and a bending step of bending the third walls, which are not cut in the cutting step at the cutting position, until the third walls oppose each other.

Specifically, the method of manufacturing a radiating member of the present invention cuts a rectangular-wave shaped metal-made plate member, leaving part thereof, and bends the left part which was not cut, and can therefore provide a radiating member which is formed with a lattice-shaped ventilation frame and is stacked in two layers or in a larger number of layers without particularly requiring alignment or adhesion.

Also, in the method of manufacturing a radiating member of the present invention, the first and the second walls may be cut in a direction normal to the first and second walls in the cutting step, in which case the bent plate members can be placed opposite to each other without a shift of grooves thereof from each other.

As described above, the radiating member of the present invention which has the first walls arranged substantially at right angles to the sheathed surface of the laminated cell, and the second walls arranged flatly for close contact with the sheathed surface of the laminated cell, can provide high load resistance properties, and can uniformly apply a load because the plurality of second walls are flatly in close contact with the sheathed surface of the laminated cell. Further, with the second walls flatly in close contact with the sheathed surface of the laminated cell, heat produced in the laminated cell can be effectively transferred to the radiating member, and effectively radiated from the first walls connected to the second walls.

### BRIEF DESCRIPTION OF THE DRAWINGS

Fig. 1 is a top plan view and a side view of a laminated cell used in a first embodiment of the present invention;
Fig. 2a is a front view generally illustrating a battery pack system in the first embodiment of the present invention, and Fig. 2b is a side sectional view generally illustrating the battery pack system in the first embodiment of the present invention.
Fig. 3a is a schematic front view of a radiating member in the first embodiment of the present invention, Fig. 3b is a partially enlarged view of the same, and Fig. 3c is a partially enlarged view illustrating a lattice-shaped ventilation frame formed by disposing the radiating member in contact with laminated cells;
Fig. 4 is a partially enlarged perspective view near an end region of a laminated cell and radiating members;
Fig. 5 is a front view illustrating part of a battery pack system in a second embodiment of the present invention;
Fig. 6a is a schematic front view of a radiating member in a third embodiment of the present invention, and Figs. 6b and 6c are front views each illustrating part of the battery pack system;
Fig. 7a is a front view of the radiating member at a stage before it is worked into a radiating member stacked in two layers, and Fig. 7b is a side view of the same;
Fig. 8a is a side view of the radiating member at a stage before it is worked into a two-layered stack, Fig. 8b is a side view of the radiating member which is cut along a cut line except for the third walls, and Fig. 8d is a side view of the radiating member when the third walls are bent to come into contact with each other;
Fig. 9a is a front view of the radiating member at a stage before it is worked into a two-layered stack, as viewed in a ventilation plane direction, Fig. 9b is a front view of the radiating member which is cut along a cut line except for the third walls, and Fig. 9d is a front view of the radiating member as viewed from an E-direction in Fig. 8d;
Fig. 10 is a front view illustrating part of a battery pack system in a fifth embodiment of the present invention;
Fig. 11a is a schematic front view of an example of a radiating member in a fifth embodiment of the present invention, and Fig. 11b is another schematic front view of the radiating member in the fifth embodiment of the present invention;
Fig. 12a is a schematic diagram illustrating an example of a laminate sheet bonding process for laminated cells which are stacked with radiating members sandwiched therebetween, in a sixth embodiment of the present invention, Fig. 12b is a schematic diagram illustrating another example of the bonding process, and Fig. 12c is a schematic diagram illustrating a further example of the bonding process;
Fig. 13 is a graph showing the result of measuring a temperature falling gradient with respect to the amount of cooling air when a temperature difference between the laminated cell and outside air temperature is 15 [°C]; and
Fig. 14 is a graph showing the result of measuring a temperature falling gradient with respect to the amount of cooling air when a temperature difference between the laminated cell and outside air temperature is 20 [°C].

### BEST MODE FOR CARRYING OUT THE INVENTION

Embodiments of the present invention will hereinafter be described with reference to the drawings.

### (First Embodiment)

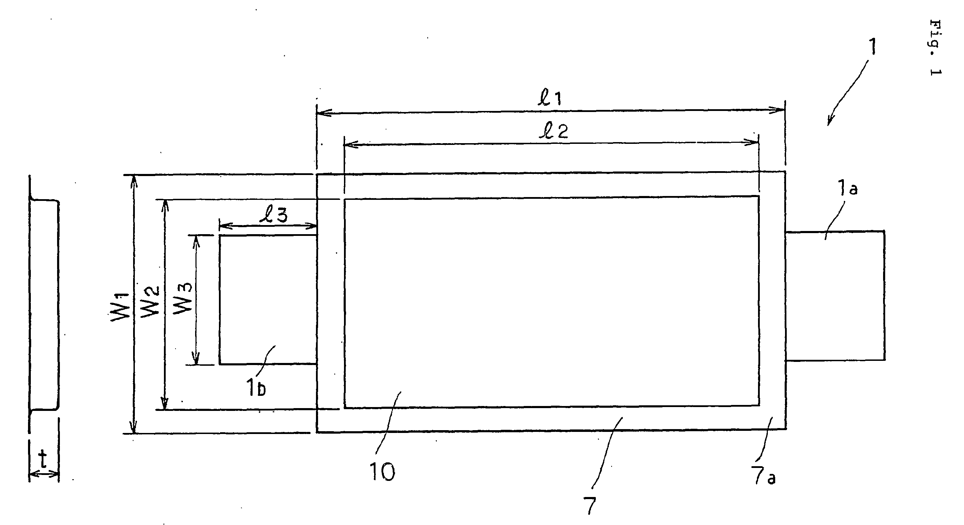

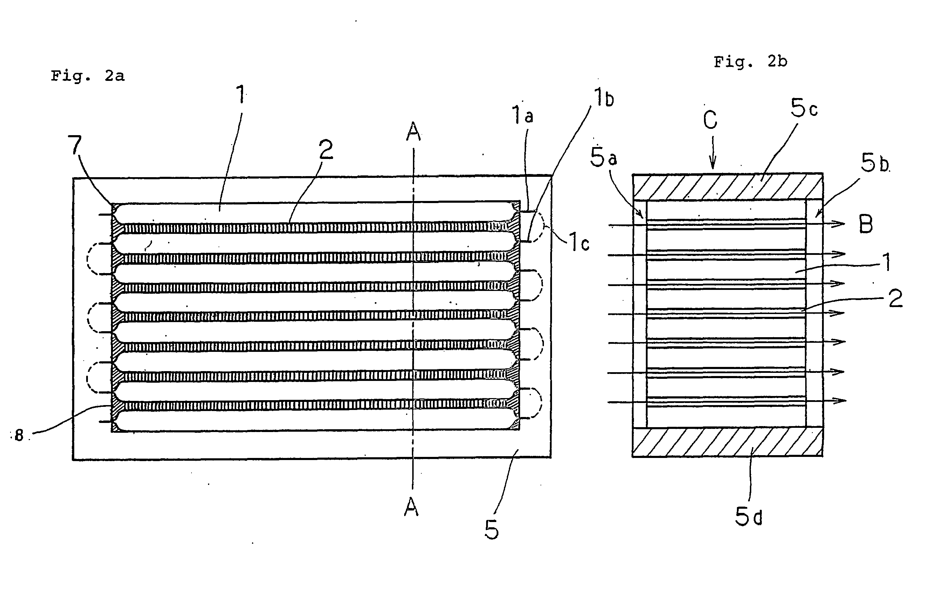

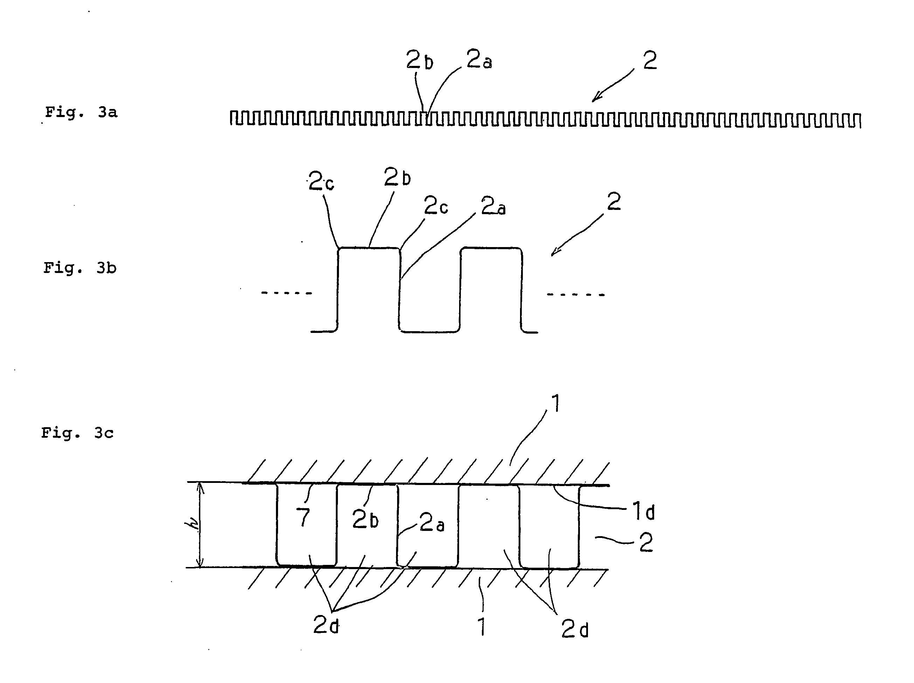

Fig. 1 illustrates a top plan view and a side view of a laminated cell used in this embodiment. Also, Fig. 2a illustrates a schematic front view of a battery pack of this embodiment, and Fig. 2b illustrates a side sectional view along an A-A line shown in Fig. 2a. Also, Fig. 3a illustrates a front view of a radiating member alone; Fig. 3b a partially enlarged view of the radiating member; and Fig. 3c a lattice-shaped ventilation frame formed by disposing the radiating member in contact with a laminated cell.

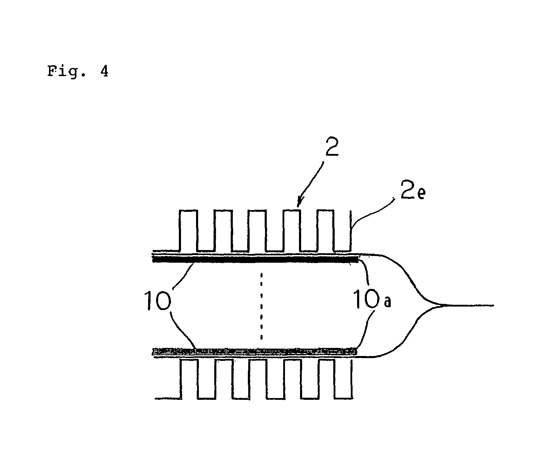

Laminated cell 1 has a structure in which laminated electrode 10 (see Fig. 4) made up of positive pole active electrodes and negative pole active electrodes is hermetically sealed by laminate sheets 7 which are formed by laminating a metal film such as aluminum and a thermally sealable resin film. Specifically, laminated cell 1 is such that laminated electrode 10 is sandwiched by two laminate sheets 7, and laminate sheets 7 are adhered to each other around the periphery of laminated cell 1 for hermetical sealing. This laminated cell 1 has positive pole terminal 1 a extending from one end side of joint 7a at which laminate sheets 7 are adhered to each other, and negative pole terminal 1 b from the other end side. Laminated cell 1 constitutes a series-connected battery pack by electrically connecting its positive pole terminal 1 a to negative pole terminal 1 b of an adjacent laminated cell 1 (connection 1 c indicated by a broken line in Fig. 2a).

The battery pack system of this embodiment has a structure in which a plurality of serially connected laminated cells 1 hermetically sealed by laminate sheets are stacked one on the other, with radiating members 2 sandwiched therebetween, and placed in housing 5. In Fig. 2, details other than housing 5, laminated cells 1, and radiating members 2 are omitted for simplicity.

Housing 5 has openings on front surface 5a and back surface 5b such that cooling air generated by a fan, not shown, or an air flow by natural convection can pass (arrow B in Fig. 2b) through lattice-shaped ventilation frame 2d (see Fig. 3c) which is formed by sandwiching radiating members 2 between laminated cells 1. Also, housing 5 has a structure such that a load can be applied to laminated cells 1 and radiating members 2 for suppressing the swelling of laminated cells 1 during recharge and discharge by pushing top surface 5c in toward bottom surface 5d (arrow C in Fig. 2b) and securing the same. Also, gaps of housing 5, laminated cells 1, and radiating members 2, indicated by hatchings in Fig. 2a, are sealed by sealing member 8. In this way, the cooling air passes into ventilation frame 2d (Fig. 3c) of radiating members 2 without escaping to the gaps of housing 5, laminated cells 1, and radiating members 2. Sealing member 8 may be any one as long as the cooling air does not escape into the gaps, and, for example, a plate member may be disposed closer to front surface 5a of the gaps.

As illustrated in Fig 3a, radiating member 2 is made of an aluminium plate which is formed alternately and continuously with a plurality of first walls 2a and second walls 2b connected to first walls 2a and formed substantially at right angles to first walls 2a. The material used for radiating member 2 can be a metal material which exhibits a high thermal conductivity, such as copper, silver paste, stainless steel and the like, other than aluminium, and its thickness is preferably 0.1 mm or less.

First walls 2a are disposed such that laminated cells 1 are effectively applied with loads applied from the top and bottom surfaces of laminated cells 1 in order to suppress the swelling associated with recharge and discharge of laminated cells 1, and that they are in parallel with the directions of the loads, i.e., substantially perpendicular to surface 1d of laminated cell 1 such that radiating member 2 itself is not collapsed by the loads.

Second walls 2b form a flat plane substantially parallel with surface 1d in order to gain a heat transfer area by taking a large contact area with laminate sheet 7 of laminated cell 1, and to uniformly apply laminated cells 1 with the loads applied from the upward and downward directions of laminated cells 1 to suppress the swelling associated with recharge and discharge of laminated cells 1. Radiating member 2 of this embodiment is formed such that R-section 2c, which connects second walls 2b with first walls 2a, has the smallest radius.

The thickness, length in the cooling air flowing direction, pitch between first walls 2a, length of first walls 2a (height of radiating member 2), material and the like of radiating member 2 are determined in accordance with a desired amount of radiated heat.

As the pitch of radiating member 2 is made narrower, the numbers of first walls 2a and second walls 2b increase per unit length, so that the loads can be uniformly applied to laminated cells 1, as well as a heat radiation area is increased. However, a too narrow pitch would increase a ventilation resistance and reduce a cooling efficiency. On the other hand, as the pitch of radiating member 2 is made wider, the numbers of first walls 2a and second walls 2b decrease per unit length, so that the ventilation resistance is reduced, contrary to the foregoing, but laminated cells 1 are uniformly applied with the loads with more difficulties, and the heat radiation area is reduced. In addition, the reduction in the number of first walls 2a results in a reduction in the magnitude of the loads applied thereto. Therefore, it is necessary to set the pitch of radiating member 2 to a value which results in desired load-resistance and heat radiation properties.

Also, as illustrated in a partially enlarged perspective view near an end region of laminated cell 1 and radiating members 2 in Fig. 4, the length of radiating member 2 in the width direction (length in the horizontal direction shown in Fig. 2a) is a length with which the position of end 2e of radiating member 2 in the width direction corresponds to the position of end 10a of laminated electrode 10 of laminated cell 1. In other words, since heat is mainly generated in laminated electrode 10 in laminated cell 1, radiating member 2 is made to have a length corresponding to laminated electrode 10.

In the foregoing manner, radiating member 2 of this embodiment has the following characteristics because it comprises first walls 2a substantially perpendicular to and second walls 2b substantially parallel with surface 1d of laminated cell 1.

First, in regard to the heat radiation properties, radiating member 2 of this embodiment is flatly in close contact with laminate sheet 7, which is a sheathing material of laminated cell 1, while it is applied with loads, so that second walls 2b can effectively function as a heat transfer plane. In this way, heat produced within laminated cell 1 and conducted to laminate sheet 7 is satisfactorily conducted to second walls 2b, and transferred to cooling air which flows along first walls 2a, thus making it possible to satisfactorily cool down laminated cell 1. Specifically, the heat produced in laminated cell 1 is effectively radiated from lattice-shaped ventilation frame 2d made up of laminate sheet 7, first walls 2a, and second walls 2b.

Also, radiating member 2 of this embodiment can uniformly apply the loads applied to suppress the swelling of laminated cell 1, through the entirety of second walls 2b, because the second walls are flatly in contact with surface 1d. Further, since first walls 2a are substantially perpendicular to surface 1d of laminated cell 1, radiating member 2 of this embodiment can apply laminated cell 1 with desired loads without collapsing even if high loads are applied thereto.

Also, since radiating member 2 of this embodiment is made by working a metal plate, no steps are required for assembling a plurality of parts.

### (Second Embodiment)

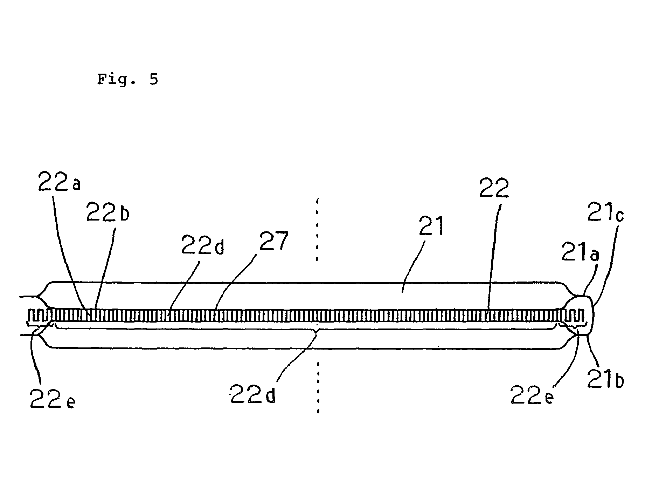

Fig. 5 schematically illustrates part of a battery pack system of this embodiment. Fig. 5 illustrates only one radiating member and two laminated cells in contact with this radiating member. Also, the structure of the battery pack system of this embodiment is similar to the battery pack system of the first embodiment except that the shape of the radiating member is different from the first embodiment, so that a detailed description is omitted.

Radiating member 22 of this embodiment has a length longer than the body of laminated cell 21 except for electrode terminals, and is a preferred configuration when one wishes to increase the amount of radiated heat. This radiating member 22 is roughly divided into two regions, i.e., contact region 22d in contact with laminated cell 21, and non-contact region 22e not in contact with laminated cell 21, where non-contact region 22e is processed to have electric insulating properties. Specifically, non-contact region 22e has been subjected to such processing as coating of an insulating agent, coating of an insulating resin, adhesion of an insulating tape, baking of insulating rubber, or the like.

For constituting as a battery pack, connection 21 c of positive pole terminal 21 a with negative pole terminal 21 b of laminated cell 21 preferably does not extend excessively from the body of laminated cell 21 in order to reduce as much as possible a space for receiving laminated cells 21. However, when connection 21 c is positioned near the body of laminated cell 21, it can come into electric contact with non-contact region 22e of radiating member 22, so that non-contact region 22e is preferably subjected to the insulating processing as mentioned above.

In the configuration of this embodiment, sealing member 8 is disposed such that cooling air flows to non-contact region 22e.

Like radiating member 2 of the first embodiment, radiating member 22 of this embodiment can cause second walls 22b to effectively function as heat transfer surfaces because second walls 22b in contact region 22d of radiating member 22 are flatly in close contact with laminated cell 21 while they are applied with loads. In this way, heat produced within laminated cell 21 and conducted to the laminate sheet is satisfactorily conducted to second walls 22b, and transferred to contact region 22d and the cooling air which flows along first walls 22a of non-contact region 22e, thus making it possible to satisfactorily cool laminated cell 21. Specifically, heat produced within laminated cell 21 is effectively radiated from lattice-shaped ventilation frame 22d made up of laminate sheet 27, first walls 22a and second walls 22b.

Also, radiating member 22 of this embodiment can uniformly apply the loads applied to suppress the swelling of laminated cell 21, through the entirety of second walls 22b, because the second walls are flatly in contact with the surface of laminated cell 21. Further, since the first walls are substantially perpendicular to the surface of laminated cell 21, radiating member 22 of this embodiment can apply laminated cell 21 with desired loads without collapsing even if high loads are applied thereto.

### (Third embodiment)

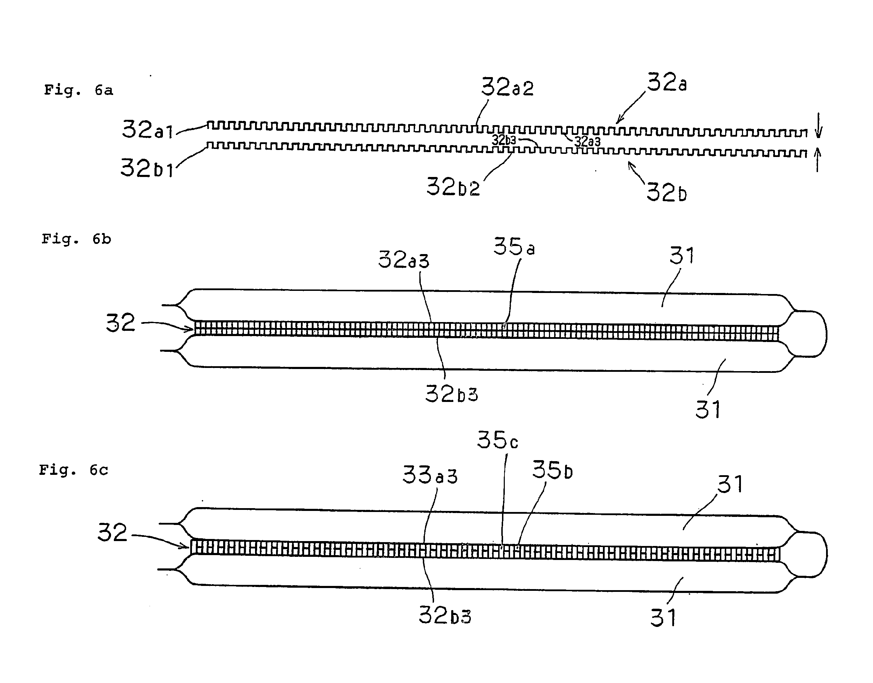

Fig. 6a illustrates a schematic front view of the radiating member of this embodiment, and Figs. 6b, 6c schematically illustrate part of a battery pack system of this embodiment. Figs. 6b. 6c each illustrate only one radiating member and two laminated cells in contact with this radiating member. Also, since the structure of the battery pack system of this embodiment is similar to the battery pack system of the first embodiment except that the shape of a radiating member is different from the first embodiment, detailed description is omitted.

Radiating member 32 of this embodiment has a structure in which radiating member 32a and radiating member 32, the height of which is substantially one-half as compared with radiating member 2 shown in the first and second embodiments, are stacked one on the other.

Radiating member 32 illustrated in Fig. 6b is an example in which radiating member 32a made up of first walls 32a1, and second walls 32a2 and third walls 32a3, disposed substantially perpendicular to first walls 32a1, and radiating member 32b similarly made up of first walls 32b1, and second walls 32b2 and third walls 32b3, disposed substantially perpendicular to first walls 32b1, are placed one on the other in a staggered configuration, and integrated, and this is disposed between laminated cells 31. Radiating member 32 illustrated in Fig. 6c, in turn, is an example in which radiating member 32a is integrated with radiating member 32b such that third walls 32a3 of radiating member 32a and third walls 32b3 of radiating member 32b oppose each other, and disposed between laminated cells 31.

Radiating member 32, configured as illustrated in Fig. 6b, is formed with lattice-shaped ventilation frame 35a, which fully has the same cross-sectional shape, stacked in two layers. Also, radiating member 32, configured as illustrated in Fig. 6c, has an alternating arrangement of lattice-shaped ventilation frame 35b stacked in two layers and lattice-shaped ventilation frame 35c having a cross-sectional area approximately twice as large as ventilation frame 35b.

In radiating member 32 of this embodiment, first walls 32a1, 32b1 of radiating members 32a, 32b respectively have heights one-half of first walls 32a of radiating member 2 shown in the first embodiment, and radiating member 32a and radiating member 32 are stacked one on the other to have an equivalent height to radiating member 2, i.e., a ventilation area, through which cooling air flows, is made equivalent to radiating member 2.
Radiating member 32 has a structure which is more unlikely to be collapsed by loads, which are applied to suppress the swelling of laminated cells 31, by reducing the heights of first walls 32a1, 32b1 of radiating members 32a, 32b. Therefore, radiating member 32 has a structure suitable when one wishes to further increase the resistance to load. Also, radiating member 32 can increase the heat radiation effect because third walls 32a3, 32b3 function as radiating planes.

Like radiating member 2 of the first embodiment and the like, radiating member 32 of this embodiment can also cause second walls 32a2, 32b2 to function as heat transfer surfaces because second walls 32a2, 32b2 of radiating member 22 are flatly in contact with laminated cell 31 while they are applied with loads. In this way, heat produced within laminated cell 31 and conducted to the laminate sheet is satisfactorily conducted from second walls 32a2, 32b2 to first walls 32a1, 32b1 and third walls 32a3, 32b3, and is transferred to the cooling air which flows along first walls 32a1, 32b1 and third walls 32a3, 32b3. Consequently, laminated cell 31 is satisfactorily cooled down.

Also, radiating member 32 of this embodiment can uniformly apply the loads applied to suppress the swelling of laminated cell 31, through the entirety of second walls 32a2, 32b2 because second walls 32a2, 32b2 are flatly in contact with the surface of laminated cell 31. Further, since the radiating member 32 of this embodiment has a structure in which radiating members 32a, 32b, the height of which is substantially one-half as compared with radiating member 2 of the first embodiment, are stacked one on the other, radiating member 32 of this embodiment can apply laminated cell 31 with desired loads without being collapsed even if higher loads are applied thereto, as described above.

This embodiment has shown the configuration in which two radiating members 32a, 32b, which excel in the resistance to load, are stacked one on the other, in which case the alignment of radiating members 32a, 32b is critical. For example, when the configuration illustrated in Fig. 6c is realized by two radiating members 32a, 32b, it is required to integrate radiating members 32a, 32b such that they oppose each other without causing third walls 32a3 of radiating member 32a and third walls 32b3 of radiating member 32b to shift in the horizontal direction. If radiating members 32a, 32b are bonded with even a slight shift of third walls 32a3 and third walls 32b3, radiating members 32a, 32b can collapse by loads applied from the upward and downward directions. Also, with a shift in the depth direction, radiating members 32a, 32b can also collapse by the loads, in which case the flow of cooling air is impeded. Further, even if third walls 32a3 of radiating member 32a are correctly aligned to third walls 32b3 of radiating member 32b in the horizontal direction and in the depth direction, radiating member 32a and radiating member 32b are susceptible to displacement when they are sandwiched by laminated cells 31, so that they need to be fixed to each other. They can be fixed by coating an adhesive on third walls 32a3 and 32b3, in which case the adhesive can squeeze out to ventilation frame 35c to reduce the ventilation area. On the other hand, in the fixation of both with a double-sided tape, the double-sided tape can squeeze out, though slightly, to ventilation frame 35c. A method of adhering radiating members 32a, 32b to each other, fixing them with a double-sided tape, or fixing them by winding them with a fixing tape in a region which is not in contact with the body of laminated cell 31 experiences difficulties in alignment, and since there is an insufficient bonding surface, a shift can occur due to vibrations after assembly when the battery pack is mounted in an electric car.

Also, in a configuration which involves adhering radiating members 32, 32b to each other, it can also be thought that end regions of matching surfaces of third walls 32a with walls 32b3 will disturb the flow of cooling air on the cooling air introduction side to impede the introduction of the cooling air into ventilation plane 35b.

Therefore, radiating member 32 stacked in two layers, illustrated in this embodiment, was manufactured by a method of bending single radiating member 32 into halves to achieve the two-layer stack.

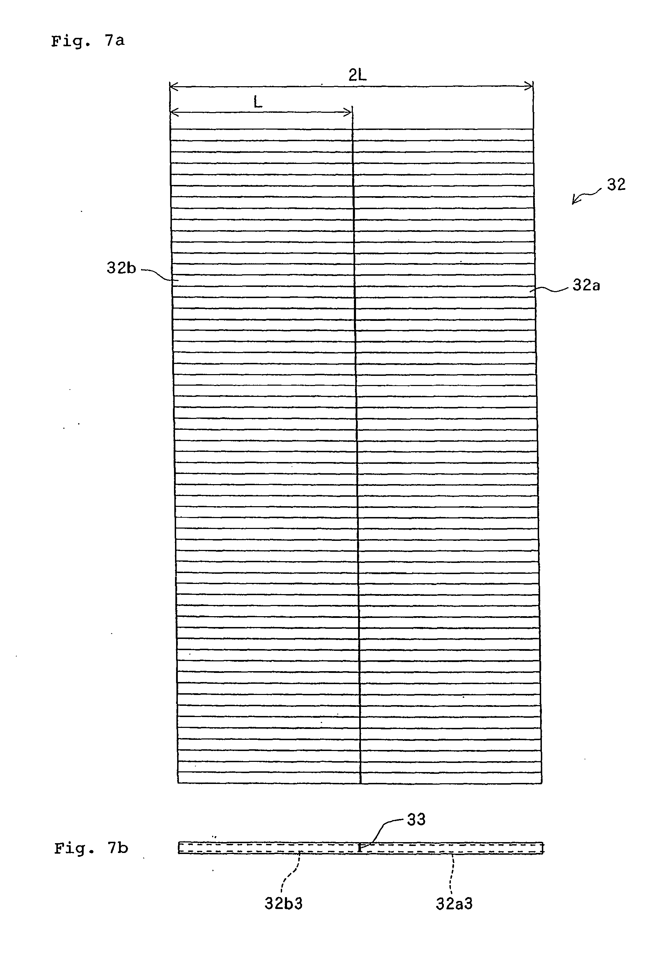

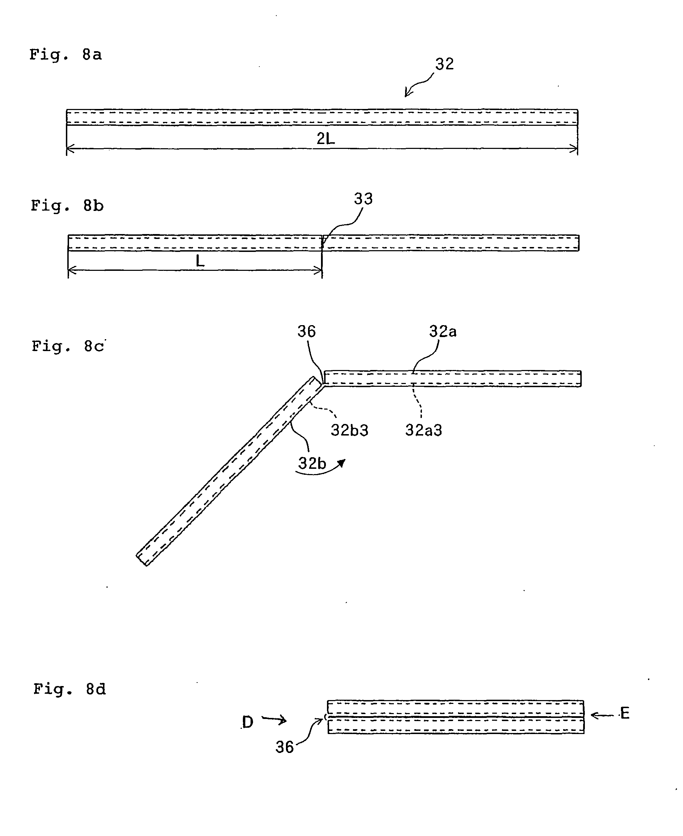

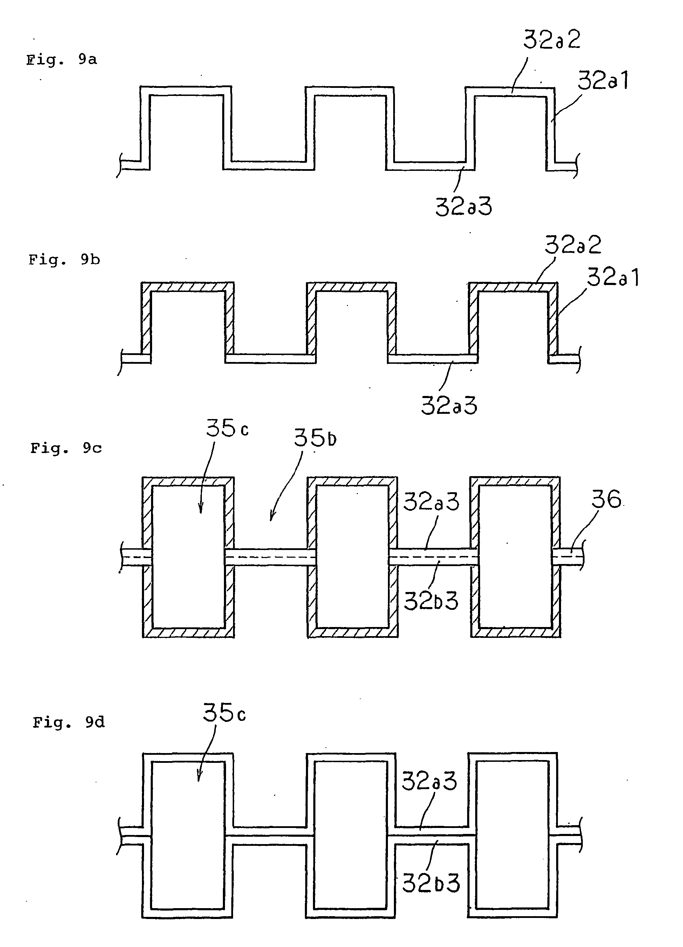

Fig. 7a is a top plan view of radiating member 32 at a stage before it is bent into radiating member 32 stacked in two layers, Fig. 7b is a side view of the same, and Figs. 8 and 9 are diagrams illustrating respective steps in which radiating member 32 before it is bent into the two-layer stack illustrated in Figs. 7a, 7b is worked into radiating member 32 stacked in two layers, where Fig. 8 is a diagram of radiating member 32 viewed from a lateral direction, and Fig. 9 is a partially enlarged view of radiating member 32 viewed in a direction in which cooling air flows. In addition, Fig. 9c is a diagram of radiating member 32 viewed from a D-direction in Fig. 8d, and Fig. 9d is a diagram viewed from an E-direction in Fig. 8d.

The length of radiating member 32 in the depth direction before the work, i.e., the length in the direction in which cooling air flows is length 2L twice the length of laminated cell 31 in the depth direction, i.e., length L of each wall in the longitudinal direction.

While Figs. 8a and 9a illustrate radiating member 32 before the work, first walls 32a1, 32b1 and second walls 32a2, 32b2 (hatched portions shown in Fig. 9b) are cut from this radiating member 32 along cut line 33 at a position distanced by L from the end surface, i.e., at the half in the depth direction, as illustrated in Figs. 7b, 8b, leaving third walls 32a3, 32b3. This cut line 33 extends in a direction at right angles to each of the first and second walls.

Next, as illustrated in Figs. 8c, 8d, radiating member 32 cut along cut line 33, leaving third walls 32a3, 32b3, is bent at bend 36 of third walls 32a3, 32b3, which are left without being cut away, until third walls 32b3 of radiating member 32b oppose third walls 32a3 of radiating member 32a and they come into contact with each other.

In this way, radiating member 32 stacked in two layers, made up of radiating member 32a and radiating member 32b connected through bend 36, is manufactured, as illustrated in Figs. 8d, 9c, and 9d.

The manufacturing method of this embodiment described above has the following features.

First, when radiating member 32a and radiating member 32b are stacked one on the other, alignment of one to the other is not at all necessary.

Further, since radiating member 32a and radiating member 32b are connected through bend 36, grooves of radiating member 32, which are to form ventilation surfaces 35b, will not shift, so that third walls 32a3 need not be bonded to third walls 32b3 with an adhesive. Thus, no adhesive will squeeze out to reduce the ventilation area of ventilation frame 35b.

Also, radiating member 32 having bend 36 manufactured by the manufacturing method of this embodiment is less likely to impede the introduction of cooling air into ventilation plane 35b by placing bend 36 with a smoothly curved shape on a cooling air introduction side.

While this embodiment has been described giving an example of the structure which includes the radiating member stacked in two layers, this embodiment is not limited to this, but may employ a structure which includes radiating member stacked in three or more layers as required. In the aforementioned configuration which involves bending a single radiating member into multiple layers, for example, in the case of a three-layer stack, a radiating member stacked in three layers can be provided by cutting a radiating member of 3L long at a position distanced by L from the end surface, and then cutting the surface on the opposite side at a position distanced by 2L from the end surface.

### (Fourth Embodiment)

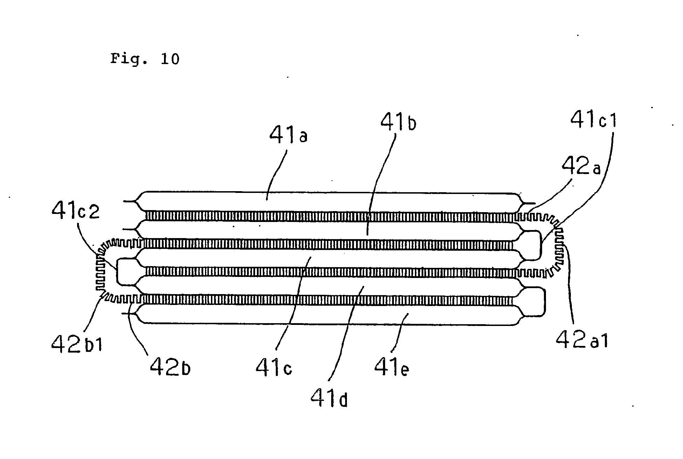

Fig. 10 schematically illustrates part of a battery pack system of this embodiment.

The battery pack system of this embodiment has radiating member 42a bent in an inverted C-shape arranged to straddle connection 41 c1. Radiating member 32a is in contact with the bottom surface of laminated cell 41 a, the top surface of laminated cell 41 b, the bottom surface of laminated cell 41 c, and the top surface of laminated cell 41 d, respectively. Likewise, radiating member 42b is arranged to straddle connection 41 c2, and is in contact with the bottom surface of laminated cell 41 b, the top surface of laminated cell 41 c, the bottom surface of laminated cell 41 d, and the top surface of laminated cell 41 e, respectively.

For implementing the configuration illustrated in this embodiment, bent sections 42a1, 42b1 of radiating members 42a, 42b have been preferably subjected to electric insulating processing, as has been described in the second embodiment.

Radiating members 42a, 42b of this embodiment can reduce the number of parts, and produce the heat radiation effect in bent sections 42a1, 42b1 through which cooling air tends to pass.

### (Fifth Embodiment)

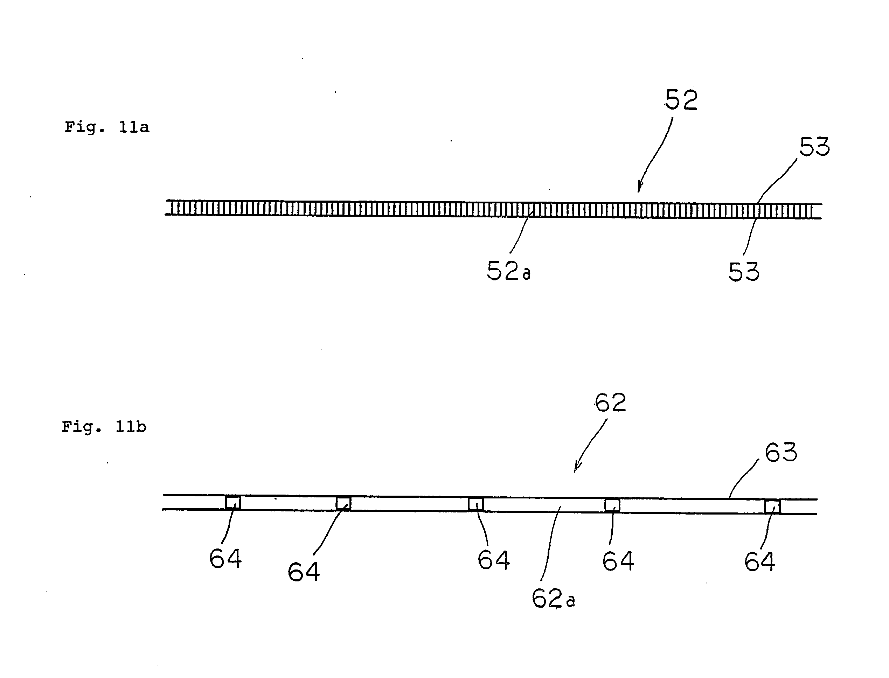

Figs. 11a, 11b illustrate front views schematically illustrating radiating members of this embodiment. Radiating member 52 illustrated in Fig. 11a is made up of the radiating member in the shape illustrated in each of the aforementioned embodiments, and flat plates 53 mounted on the top and bottom surfaces of the radiating member, wherein lattice-shaped ventilation frame 52a is formed only by radiating member 52. Since radiating member 52 is in close contact with the surface of a laminated cell through flat plate 53, it can exhibit a high resistance to load and heat transfer properties.

Radiating member 62 illustrated in Fig. 11 b includes block-shaped supporting members 64 sandwiched by two flat plates 63, where this radiating member 62 has lattice-shaped ventilation frame 62a formed only by radiating members 62 as well. Supporting members 64 are preferably made of a metal having good heat transfer properties. Radiating member 62 can also exhibit a high resistance to load and heat transfer properties because it is in close contact with the surface of a laminated cell through flat plate 53.

### (Sixth Embodiment)

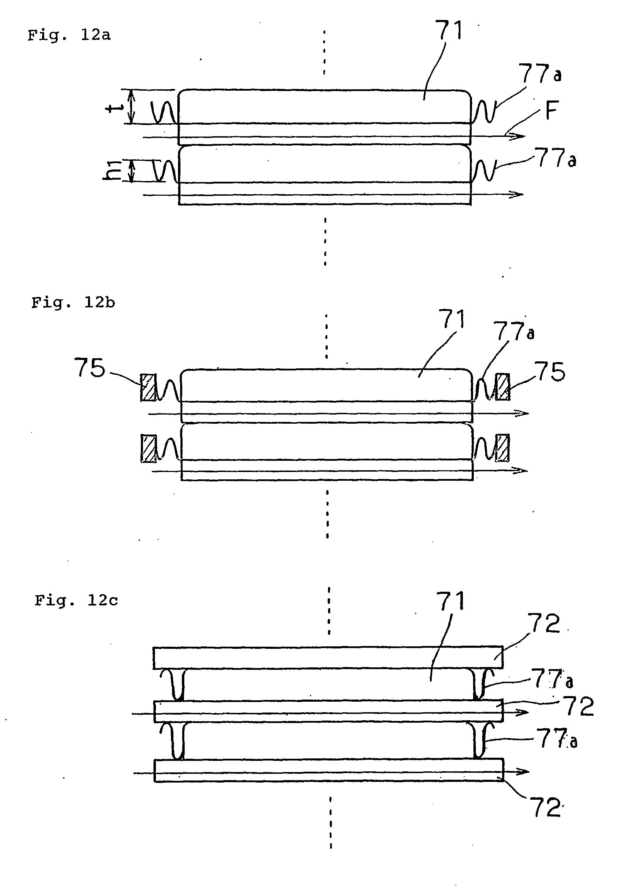

Fig. 12 is a schematic diagram of laminated cells stacked with a radiating member sandwiched therebetween, viewed from one side, for describing a process of bonding laminate sheets in this embodiment.

In this embodiment, a description will be given of a packing method which reduces the receiving volume, when laminated cells 71 are stacked and packed into a housing, avoids the flow of cooling air impeded by joints 77a, which are located in the periphery of laminated cells 71, or a matching surface of laminate sheets 77, and improves the heat radiation properties.

In the configuration of Fig. 12a, joint 77a of laminated cell 71 is bent to reduce the receiving volume, such that height h₁ of bent joint 77a falls within thickness t of laminated cell 71. This configuration can reduce the space not only in the depth direction but also in the height direction of laminated cell 71. Also, in this configuration, since joint 77a is bent such that it falls within thickness t of laminated cell 71, the flow of cooling air (arrow F in the figure) is less susceptible to impediments to flowing into radiating member 72 or flowing out from radiating member 72.

In the configuration of Fig. 12b, part of bent joint 77a is brought into contact with part of metal-made housing 75 to transfer heat from laminated cell 71 to metal-made housing 75 for cooling.

In the configuration of Fig. 12c, part of bent joint 77a is brought into contact with metal-made radiating member 72 to transfer heat from laminated cell 71 to radiating member 72 for cooling.

While the configurations of Figs. 12a, 12b, 12c show joints 77a folded twice as an example, the present invention is not limited to this, but joint 77a may be folded only once, or may be folded three times or more. Also, bent joint 77a may be brought into contact with both housing 75 and radiating member 72.

As described above, laminated cell 71 of this embodiment improves a packing efficiency and heat radiation properties because joint 77a of laminate sheets 77 is bent such that bent height h₁ of bent joint 77 falls within thickness t of laminated cell 71, or joint 77a is brought into contact with part of metal-made housing 75 or radiating member 72.

### (Examples)

Next, a description will be given of examples of the present invention.

In this example, three laminated cells are connected in parallel and ten laminated cells are connected in series to form a module (36 [V], 15[Ah]), where any of three radiating members shown in Table 1 is sandwiched between respective cells, and they are further surrounded by a heat insulating material. In Fig. 2 shown in the first embodiment, laminated cells stacked in eight layers, with seven radiating members sandwiched therebetween, are packed into a housing. On the other hand, in this example, laminated cells were stacked in ten layers, and nine radiating members were sandwiched therebetween and additional radiating members disposed on the outer sides of the top and bottom laminated cells, so that a total of 11 radiating members were used, and they were packed into a heat insulating material. Then, investigations were made on the heat radiation properties by each radiating member during recharge and discharge. Also, as a comparative example, similar investigations were made on a module made up of three parallelly connected laminated cells and ten serially connected laminated cells with aluminum plates and heat transfer sheets sandwiched between the laminated batteries, instead of the rectangular-wave shaped radiating members.

### Conditions during Recharge and Discharge

During Discharge: from 40 [V] (4.0 V/cell) (SOC: 80 %)) to constant current discharge (termination voltage: 25 [V], 2.5 [V/cell])
During Recharge: from 30 [V] (3.0 [V/cell] (SOC 10 %)) to constant current recharge (termination voltage 40 [V], 4.0 [V/cell])

**Table 1**

| | Height h | Width | Depth | Pitch | Thickness |
|---|---|---|---|---|---|
| | [mm] | [mm] | [mm] | [mm] | [mm] |
| Radiating Member A | 1.0 | 164 | 75 | 1.7 | 0.1 |
| Radiating Member B | 1.6 | 164 | 75 | 1.7 | 0.1 |
| Radiating Member C | 1.6x2 | 164 | 75 | 1.7 | 0.1 |

For reference, the material of respective radiating members A, B, C is aluminum, the thickness of which is 0.1 [mm], and radiating members B, C have a buckling load of 3600 Kg. Also, the laminated cells used in this example were the one illustrated in Fig. 1 shown in the first embodiment, and had dimensions shown in Table 2, and were applied with loads of 800 Kg or more.

**Table 2**

| | |
|---|---|
| I1 (including joint) [mm] | 166 |
| I2 (laminated electrode) [mm] | 146 |
| I3 (electrode terminal) [mm] | 40 |
| W1 (including joint) [mm] | 95.5 |
| W2 (laminated electrode) [mm] | 75.5 |
| W3 (electrode terminal) [mm] | 44 |
| t (thickness) [mm] | 10 |

Radiating members A, B have the shape illustrated in the first embodiment, where they are similar except that radiating member A has a height of 1.0 [mm], while radiating member B has a height of 1.6 [mm]. Radiating member C in turn has the configuration made by bending radiating member B into a two-layer stack by the manufacturing method illustrated in the third embodiment.

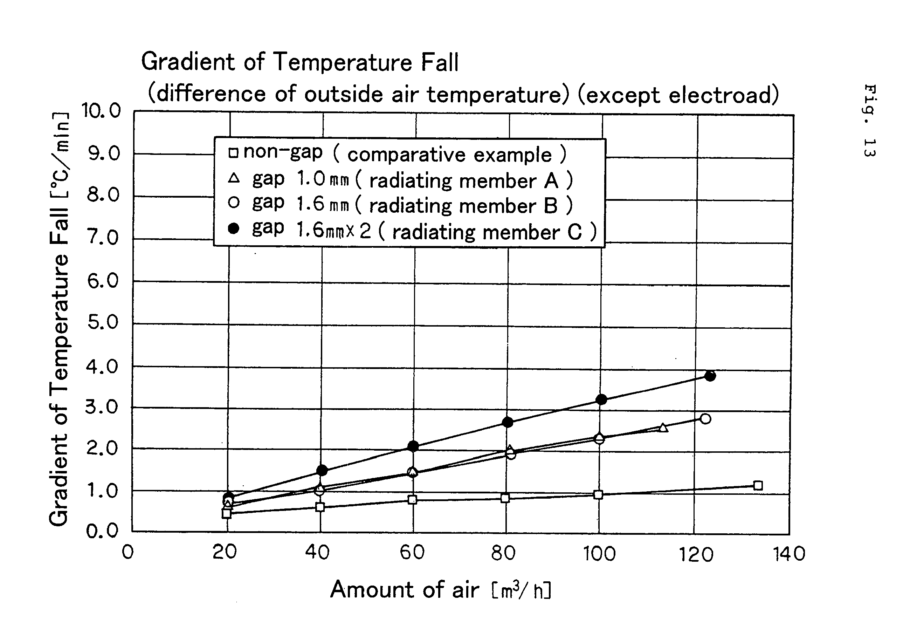

Fig. 13 shows the result of measuring the gradient [°C/min] of the temperature fall with respect to the amount of cooling air when a temperature difference between the laminated cells and outside air temperature was 15 [°C].

In comparison with the comparative example which does not include the radiating member, all of radiating members A, B, C exhibited high gradient values, and produced high cooling effects. For example, the result shows that when with the amount of cooling air was 100 [m3/h], radiating members A, B exhibited 2.3 [°C/min] and radiating member C, 3.3 [°C/min], while the comparative example exhibited 1 [°C/min].

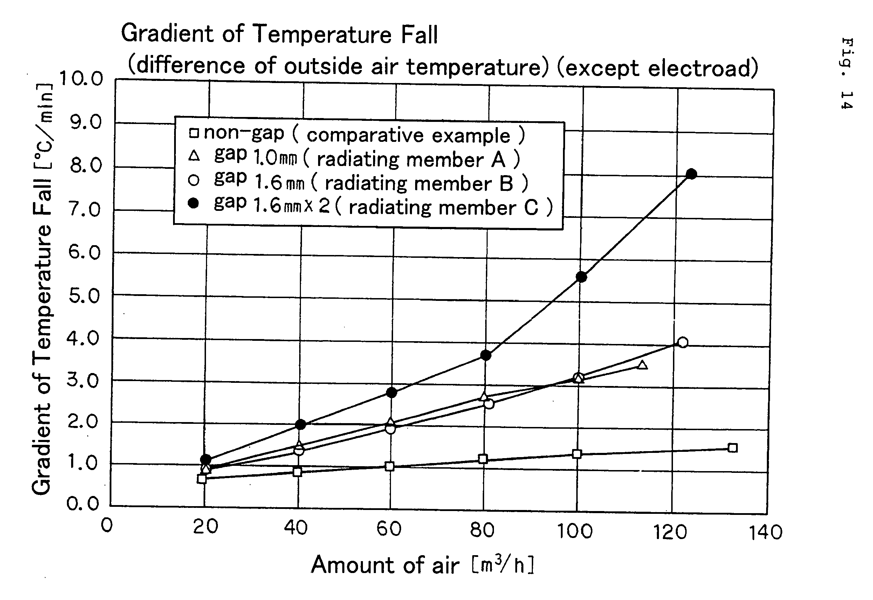

Next, Fig. 14 shows the result of measuring the gradient [°C/min] of the temperature fall with respect to the amount of cooling air when a temperature difference between the laminated cells and outside air temperature was 20 [°C].

When the temperature difference with the outside air temperature is 20 [°C], the result shows that when with the amount of cooling air was 100 [m3/h], radiating members A, B exhibited 3.2 [°C/min] and radiating member C, 5.6 [°C/min], thus all producing high cooling effects, while the comparative example exhibited 1.4 [°C/min].

It was clarified that radiating member C (height 3.2 [mm] (=1.6 [mm]x2)) produced particularly high cooling effects as the temperature difference increased between the laminated cell and the outside air temperature.

## Claims

1. A radiating member for a laminated cell, covered with a laminate material, which is in contact with a surface of said laminated cell to radiate heat produced by said laminated cell, **characterized in that**:
said radiating member has a plurality of first walls, and a plurality of second flat walls connected to said first walls and arranged substantially at right angles to said first walls, wherein at least one of said second walls is arranged for close contact with a sheathed surface of said laminated cell.

2. The radiating member for a laminated cell according to claim 1, wherein said first walls and said second walls are alternately and continuously formed.

3. The radiating member for a laminated cell according to claim 1 or 2, wherein a lattice-shaped ventilation frame is formed.

4. The radiating member for a laminated cell according to any of claims 1 to 3, made of at least one material selected from a group comprising aluminum, aluminum alloy, copper, silver paste, and stainless steel.

5. The radiating member for a laminated cell according to claim 4, made of a plate material having a thickness of 0.1 mm or less.

6. The radiating member for a laminated cell according to any of claims 1 to 5, made of a single plate material.

7. A battery pack system comprising a battery pack having a plurality of electrically coupled laminated cells each covered with a laminate material, **characterized by**:
having the radiating member for a laminated cell according to any of claims 1 to 6.

8. The battery pack system according to claim 7, formed with a lattice-shaped ventilation frame by said radiating member and said laminated cells.

9. The battery pack system according to claim 7 or 8, wherein a joint, which is a peripheral portion of said laminate material, is bent, and part of said joint is in contact with said metal-made housing.

10. The battery pack system according to any of claims 7 to 9, wherein a joint, which is a peripheral portion of said laminate material, is bent, and part of said joint is in contact with said radiating member.

11. The battery pack system according to any of claims 7 to 9, wherein a joint, which is a peripheral portion of said laminate material, is bent to have a bending height which does not exceed the thickness of said laminated cell, and placed in a housing.

12. A method of manufacturing a radiating member for a laminated cell, which is in contact with a surface of said laminated cell covered with a laminate material for radiating heat generated by said laminated cell, **characterized by** having:
a step of providing a metal-made plate member having a rectangular-wave shape in cross-section, said plate member having a first wall, a second flat wall connected to one end side of said first wall and arranged substantially at right angles to said first wall, and a third flat wall connected to the other end side of said first wall and arranged substantially at right angles to said first wall;
a cutting step of cutting said first wall and said second wall, without cutting said third wall, at a predetermined cutting position in a longitudinal direction of said first wall, said second wall, and said third wall; and
a bending step of bending said third wall, which is not cut in said cutting step at the cutting position, until said third wall opposes each other.

13. The method of manufacturing a radiating member according to claim 12, wherein said first and said second wall are cut in a direction normal to said first and second wall in said cutting step.
